**Europäisches Patentamt**

**European Patent Office**

**Office européen des brevets**

(19)

(11) Veröffentlichungsnummer: **0 331 995**
**B1**

(12) **EUROPÄISCHE PATENTSCHRIFT**

(45) Veröffentlichungstag der Patentschrift: **09.01.91**

(51) Int. Cl.⁵: **B 60 Q 7/00**

(21) Anmeldenummer: **89103335.9**

(22) Anmeldetag: **25.02.89**

(54) **Warndreieck für Kraftfahrzeuge.**

(30) Priorität: **05.03.88 DE 3807300**

(43) Veröffentlichungstag der Anmeldung:
**13.09.89 Patentblatt 89/37**

(45) Bekanntmachung des Hinweises auf die
Patenterteilung:
**09.01.91 Patentblatt 91/02**

(84) Benannte Vertragsstaaten:
**AT BE CH DE ES FR GB GR IT LI LU NL SE**

(56) Entgegenhaltungen:
CH-A- 568 867    DE-U-8 517 757
DE-A-1 108 248    FR-A-1 411 513
DE-A-1 210 721    FR-A-2 315 410
DE-A-1 766 750    GB-A- 990 110
DE-A-2 910 787    GB-A-2 188 355
DE-A-3 408 158    US-A-3 318 279

(73) Patentinhaber: **Kiefer, Klaus Jürgen**
**Jungfernstieg 34**
**D-2000 Hamburg 36 (DE)**
(73) Patentinhaber: **Straten, Günter**
**Meilsdorfer Damm 12**
**D-2071 Siek-Meilsdorf (DE)**

(72) Erfinder: **Kiefer, Klaus Jürgen**
**Jungfernstieg 34**
**D-2000 Hamburg 36 (DE)**
Erfinder: **Straten, Günter**
**Meilsdorfer Damm 12**
**D-2071 Siek-Meilsdorf (DE)**

(74) Vertreter: **Richter, Werdermann & Gerbaulet**
**Neuer Wall 10**
**D-2000 Hamburg 36 (DE)**

Courier Press, Leamington Spa, England.

**Beschreibung**

Die Erfindung betrifft ein Warndreieck für Kraftfahrzeuge, das in Formgebung und Farbe dem Warnschild "Gefahrenstelle" entspricht, bestehend aus einem vorzugsweise aus- und einklappbaren Ständer, drei in Dreiecksform angeordneten Reflektorschenkeln und einer dazwischenliegenden, weißen (Hintergrund-) Fläche mit einem senkrechten schwarzen Balken, wobei das Warndreieck selbstleuchtend ist und die Beleuchtung über ein mit der Kraftfahrzeugbatterie direkt oder indirekt verbindbares Kabel oder über eine im Warndreieck integrierte Energiequelle mit Energie versorgt wird.

Nach den Straßenverkehrsvorschriften müssen o.a. Warndreiecke tragbar, standsicher und so beschaffen sein, daß sie bei Gebrauch auf ausreichende Entfernung erkennbar sind. Warndreiecke müssen rückstrahlend sein.

In der Regel werden zusammenklappbare Warndreiecke der o.g. Art verwendet, die in einem Köcher untergebracht sind. Nach Entnahme aus dem Köcher werden die Ständerteile entsprechend ausgeklappt, die Reflektorschenkel aufgerichtet und über einen Druckknopfverschluß ebenso befestigt wie das meist als Kunststofftuch ausgebildete Innenstück mit einer weißen Hintergrundfläche und einem senkrechten schwarzen Balken.

Allerdings hat dieses Warndreieck den Nachteil, daß es bei schlechten Sichtverhältnissen, insbesondere bei Regen, bei Dämmerung, in der Dunkelheit oder bei Schneefall oder Nebel nur sehr schwer erkennbar ist, vielfach sogar mit der Folge einer erheblichen Verkehrsgefährdung übersehen wird.

Auch hat es sich als Nachteil erwiesen, daß die Abschätzung von Wegstrecken vielfach falsch vorgenommen wird, so daß z.B. auf Autobahnen, auf denen das Warndreieck in mindestens 150 m Abstand vom liegengebliebenen Fahrzeug aufgestellt werden soll, der nachfolgende Verkehr viel zu spät Notiz von dem Warnschild "Gefahrenstelle" nehmen kann.

Auch ist bereits ein zusammenlegbares Warndreieck für Kraftfahrzeuge bekannt, das in Formgebung und Farbe dem Warnschild Gefahrenstelle" entspricht und aus einem aus- und einklappbaren Ständer, drei in Dreiecksform angeordneten Reflektorschenkeln und einer dazwischenliegenden, weißen Hintergrundfläche mit einem schwarzen Balken besteht. Dabei ist vorgesehen, daß an einem der Reflektorschenkel eine Warnleuchte angeordnet ist (DE-GM 81 21 669.6).

Weiterhin ist ein Pannenwarngerät für Kraftfahrzeuge bekannt, das aus einem an der Wand eines mittels eines Deckels verschließbaren Koffers angebrachten Warndreieck besteht, das durch den Koffer in ausgestelltem Zustand gehalten wird, wobei die das Warndreieck tragende Wand des Koffers und das Warndreieck aus lichtdurchlässigem Material bestehen und in dem Koffer eine Lichtquelle angeordnet ist, wobei das Warndreieck durch diese Lichtquelle von innen beleuchtbar ist (DE-GM 85 10 200).

Bei einem anderen vorgeschlagenen mitführbaren Warndreieck für Kraftfahrzeuge ist vorgesehen, daß das Warndreieck mit einer Beleuchtungseinrichtung versehen ist, wobei die Beleuchtungseinrichtung in den Schenkeln des Warndreiecks und die Reflektorleisten abgedeckt angeordnet ist, wobei die Beleuchtung über ein mit der Kraftfahrzeugbatterie direkt oder indirekt verbindbares Kabel mit Energie versorgt wird (DE-GM 85 23 829).

Auch ist ein Warndreieck bekannt, bei dem vor dem Warnbalken eine Halterung zur Aufnahme einer Signalleuchte vorgesehen ist. Diese Halterung kann gem. einer bevorzugten Ausführungsform aus einem durchsichtigen Material bestehen, so daß zumindest teilweise vermieden wird, daß der Warnbalken abgedeckt wird. Eine spezielle und gezielte Beleuchtung der Reflektorstäbe ist hierbei jedoch nicht vorgesehen (DE-GM 85 17 757).

Alle diese bekannten Warndreiecke haben den Nachteil, daß sie sehr bau- und raumaufwändig gestaltet sind und daß eine sichere Beleuchtung der weißen Fläche und der Reflektorschenkel nicht immer gegeben ist. Hierdurch ergeben sich erhebliche Verkehrsgefährdungen.

Es ist daher Aufgabe der vorliegenden Erfindung, das eingangs genannte Warndreieck unter Vermeidung der aufgezeigten Nachteile zu verbessern, insbesondere soll es bereits bei Schneefall/Nebel und starkem Regen aus weiter Entfernung deutlich sichtbar sein.

Die Aufgabe wird bei dem in Rede stehenden Warndreieck dadurch gelöst, daß es in im Prinzip nach dem Stand der Technik bekannter Weise klappbar ist und der mit der Beleuchtungseindrichtung ausgestattete Balken als auf der Hintergrundfläche oder in einer Aussparung in der Hintergrundfläche angeordneter Flachquader ausgebildet ist und daß der Flachquader an der frontseitigen Oberfläche und der rückseitigen Oberfläche lichtundurchlässig sind.

Vorzugsweise werden hierzu zwei Alternativen vorgeschlagen: Zum einen wird nach einer Weiterbildung der Erfindung die Beleuchtung in einem Flachquader, der gleichzeitig als senkrechter schwarzer Balken dienen soll, derart angeordnet, daß die längsseitigen gegenüberliegenden Oberflächen lichtundurchlässig geschwärzt sind und die lichtdurchlässigen schmaleren Seitenflächen Licht in Richtung auf die Reflektorschenkel abstrahlen. Hierbei werden sowohl der weiße Hintergrund als auch die Reflektorschenkel angestrahlt. Der besondere Vorteil liegt darin, daß diese Ausführungsform im Prinzip auch wieder zusammenlegbar in einen kleinen Köcher gesteckt werden kann.

Zum anderen kann in einer weiteren Ausführungsform das gesamte Warndreieck als geschlossener Vollkörper mit einer integrierten Beleuchtung ausgestattet sein, auf ein Flachquader, der gleichzeitig als senkrechter schwarzer Balken dienen soll, derart angeordnet, daß die längsseitigen gegenüberliegenden Oberflächen lichtundurchlässig geschwärzt sind und die lichtdurchlässigen schmaleren Seitenflächen Licht in Richtung auf die Reflektorschenkel abstrahlen und dessen einzigen beweglichen Teile noch die Füße des klappbaren Ständers sind. Der Vollkörper nimmt zwar einen größeren Raum in Anspruch, hat jedoch den Vorteil, daß er sofort funktionsfähig aufgestellt werden kann.

Die Beleuchtung des Warndreieckes kann entweder über eine oder mehrere Batterien mit Energie gespeist werden, die entweder im Quader oder im Warndreieck angeordnet sind. Alternativ hierzu kann vorzugsweise auch die Stromversorgung der Beleuchtung über ein mit der Kraftfahrzeugbatterie direkt oder indirekt, insbesondere mittels eines in den Zigarettenanzünder, oder im Kofferraum befindlichen schiebbaren Steckers, verbindbares Kabel sichergestellt werden.

Besitzt das Kabel oder Abstandsseil entsprechende Markierungen und/oder knotenartige Verdickungen und/oder Leuchtelemente wie Glühbirnen, Blinkbirnen in vorbestimmten Abständen, z.B. bei einer ausgerollten Kabellänge von 50m, 100m oder 200m, so kann der Fahrer des liegengebliebenen zu sichernden Fahrzeuges sofort erkennen, in welchem Abstand er sich gerade mit dem aufzustellenden mitgeführten Warndreieck vom Fahrzeug befindet und das auch bei Dunkelheit. Das Kabel oder Abstandsseil kann dabei bevorzugterweise selbstleuchtend ausgebildet oder mit einer Signalfarbe versehen sein. Auch ist es möglich, das Kabel oder das Abstandsseil mit Rückstrahlerelemente zu versehen. Vorzugsweise wird das Kabel auf einer am oder im Warndreieck befestigten Trommel aufgewickelt, z.B. kann die Trommel ggf. abnehmbar auf dem Ständer auf der Warndreieckrückseite befestigt sein, daß sie die Sicht auf das Warndreieck nicht einschränkt.

Nach einer weiteren Ausgestaltung der Erfindung arbeitet die Beleuchtung des Warndreieckes als Blinkschaltung, vorzugsweise im Takt der Kraftfahrzeug-Warnblinkanlage. Der Betrieb kann auch unabhängig vom Kraftfahrzeug mit Batterien erfolgen, was bei Verkehrsunfällen von Vorteil ist.

Es hat sich herausgestellt, daß kontinuierlich beleuchtete Körper weniger Beachtung finden als solche, die nur taktweise beleuchtet werden. Das entsprechende LichtTaktsignal des Warndreieckes wird somit schon dann wahrgenommen, wenn das z.B. hinter einer Kurve befindliche Warndreieck noch nicht sichtbar ist. Vorzugsweise wird als Taktgeber ein freischwingender Multivibrator verwendet, der kostengünstig als Fertigteil im Handel bezogen werden kann. Nach einer weiteren Ausgestaltung der Erfindung wird der Takt des taktweise beleuchteten Warndreieckes synchron zum Takt der Kraftfahrzeug-Warnblinkanlage eingestellt. Dies kann in einfacher Weise dadurch geschehen, daß die Beleuchtung für das Warndreieck an den Taktgeber der Warnblinkanlage angeschlossen wird.

Um das Warndreieck weiterhin zusammenlegbar ausbilden zu können, wird vorzugsweise der Beleuchtungs-Flachquader über flexible Schnüre über Ösenverbindungen an den Eckpunkten der Reflektorschenkel eingehängt. Hierzu kann weiterhin vorzugsweise die Kunststoffolienfläche mit oder ohne Aussparung ausgebildet sein.

Vorteilhafte Weiterbildungen sind in den Unteransprüchen gekennzeichnet.

Ausführungsbeispiele der Erfindung sind in den Zeichnungen dargestellt und sollen folgenden erläutert werden. Es zeigen:

Fig. 1 eine Frontansicht eines klappbaren Warndreieckes nach der vorliegenden Erfindung,

Fig. 2 eine Seitenansicht des Warndreieckes nach Fig. 1,

Fig. 3 eine weitere Ausführungsform des erfindungsgemäßen Warndreieckes in einer Vollkörperausbildung, und

Fig. 4 eine freischwingende Multivibrator-Blinkschaltung.

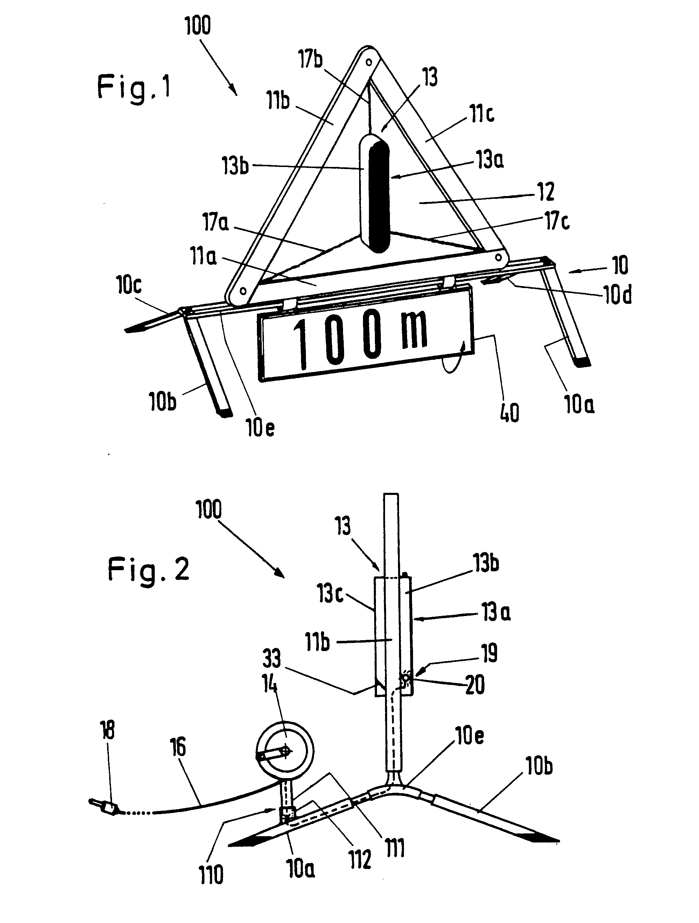

Das in den Fig. 1 und 2 dargestellte Warndreieck 100 besteht aus einem Ständer 10, dessen Mittelbalken 10e beidseitig jeweils zwei ausklappbare Flacheisenstreben 10a—10d aufweist. Mit dem Mittelblech 10e fest verbunden und vertikal stehend ist das eigentliche Warndreieck, das drei Reflektorschenkel als äußere Umrandung eines Dreieckes und eine darin angebrachte weiße Kunststoffolie aufweist. Statt der bisher nach dem Stand der Technik bekannten Ausführungsform ist vorzugsweise auf einer oder in eine entsprechende Aussparung der genannten Kunststoffolie ein leuchtender Quader als schwarzer Balken 13 eingehängt, dessen frontseitige wie rückseitige Oberflächen 13a lichtundurchlässig geschwärzt sind. Hingegen sind die jeweils anliegenden Seitenflächen 13b lichtdurchlässig, so daß sowohl die Kunststoffolie 12 als auch die Reflektorschenkel 13 beleuchtbar sind, d.h. vom Licht angestrahlt werden.

Der Quader 13 kann entweder, wie in Fig. 1 angedeutet, über flexible Schnüre 17a—c an den Eckpunkten des Warndreieckes eingehängt sein, er kann jedoch auch unmittelbar am Kunststoffolientuch in entsprechender verstärkter Ausführungsform befestigt bzw. eingehängt werden.

Die Stromversorgung der Beleuchtung 19 des Warndreieckes kann entweder über Batterien gesichert werden, die in den Reflektorschenkeln 11a—11c oder in dem Flachquader 13, vorzugsweise rückseitig des Warndreieckes in entsprechenden Halterungen angeordnet sind. Wie insbesondere Fig. 2 zu entnehmen ist, kann jedoch alternativ hierzu die elektrische Versorgung über ein Kabel 16 sichergestellt werden, das auf der Kabeltrommel 14 aufgewickelt ist, die auf den Ständer 10 aufsteckbar ist.

Dieses Kabel besitzt alle 50m eine entsprechende Längenmarkierung und ist an seinem freien Kabelende mit einem Stecker 18 versehen, der in den Zigarettenanzünder od.dgl. paßt. Die entsprechende Stromversorgung kann entweder direkt zu einer Glüh- oder Glimmlampe 30 oder über einen Schalter geführt werden. Die Kabeltrommel 14 besitzt selbstverständlich eine Kurbel oder einen Motorantrieb zum raschen Wiederaufwickeln der Verbindungsschnur.

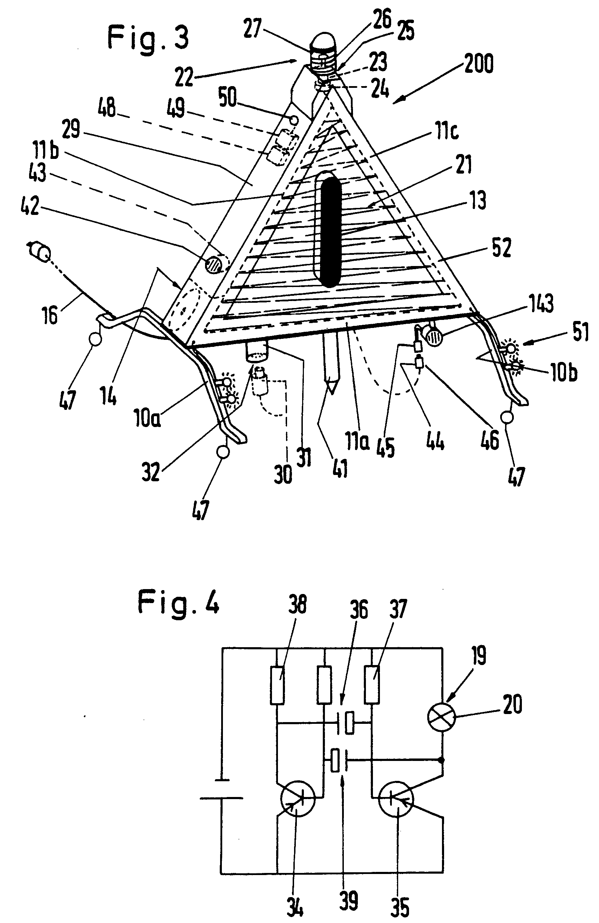

Die in Fig. 3 dargestellte Ausführungsvariante des Warndreieckes 200 besteht aus einem Vollkörper-Dreieck, wobei in dem verbreiterten unteren Basisschenkel IIa die Kabeltrommel 14 mit dem aufgewickelten Kabel bzw. Abstandsseil und/oder die Batterien für die Stromversorgung und evtl. Blinkschaltungen untergebracht sind. Der Vorteil dieser Ausführungsform liegt darin, daß lediglich die vorzugsweise noch klappbar ausgebildeten Schenkel des Ständers 10 betätigt werden mussen, ansonsten jedoch das Warndreieck unmittelbar funktionsfähig vom Fahrzeug weggetragen und aufgestellt werden kann. Die Leitungs- und Schaltungsanschlüsse sind stets vor äußerer Einwirkung geschützt.

Die Reflektorschenkel 11a, 11b, 11c sind dabei mit Heizdrähten 24 entsprechend durchsetzt, so daß bei einer Inbetriebnahme des Warndreiecks 200 immer sichergestellt ist, daß die Reflektorschenkel 11a, 11b, 11c auch bei Schnee frei bleiben, da auftreffender Schnee sofort aufgetaut wird. Auch kann die weiße Fläche mit Heizdrähten 21 versehen werden.

Bevorzugterweise ist das als hohler Vollkörper ausgebildete Warndreieck 200 mit einer zusätzlichen Warnleuchte 22 versehen. Diese Licht ausstrahlende Warnleuchte 22 führt zu einer Rundumsicherung einer Gefahrenstelle. Auf das Warndreieck 200 ist hierzu die an sich bekannte Warnleuchte 22 mit roten, blauem und/oder gelbem Blinklicht aufgesetzt und über eine aus einem Stecker 23 und einer Steckdose 24 bestehenden Steckverbindung (25) an die Stromversorgung des Warndreieckes 200 angeschlossen. Die Lichtaustrittsbereiche der Warnleuchte 22 sind mit Heizfäden 26 versehen, die in das Glas des Lichtaustrittsfensters 27 eingelassen sind.

Der Gehäusekörper 29 des Warndreieckes 200 ist mit einem Stecker 30 versehen und soll im Fahrgastraum/Kofferraum in einer Halterung mit einer Steckdose 31 verbunden und untergebracht werden. Mit dieser über die Steckverbindung 32 schließbaren Stromversorgung durch die Auto-Batterie, lädt sich dann auch die Batterie im Warndreieck auf (Ladegerät). Dadurch ist die Sicherheit gewährleistet, daß die Batterien vom Warndreieck immer voll geladen und somit jederzeit einsatzbereit sind.

Es kann auch vorgesehen werden, in dem Flachquader 13 Reflektorspiegel 33 (Fig. 2) in beliebiger Ausformung zur vorteilhaften Ausleuchtung des gesamten Warndreieckes anzuordnen. Ebenso ist die besonders vorteilhafte Anordnung von nicht dargestellten Lichtleitern in Form von Glasfaserleitern zur gezielten Ausleuchtung bestimmter Bereiche und/oder zur Herbeiführung von Licht, beispielsweise in den Flachquader 13, möglich.

In der einfacheren Ausführungsform wird das Warndreieck ständig beleuchtet betrieben. Will man jedoch einen Blinkbetrieb, so bietet sich die Verwendung ein oder mehrerer selbsttätig blinkender Glühbirnen oder die in Fig.4 dargestellten Multivibrator-Blinkschaltung an.

Im Prinzip ist ein Multivibrator ein zweistufiger Schaltverstärker, der nach dem Anschwingen selbsttätig von dem einen in den anderen Zustand kippt. An dessen Ausgang kann man daher das Signal ein oder aus oder eine Impulsfolge abnehmen. Die Transistoren 34, 35 der Multivibratorspannung kennen nur die beiden Zustände des vollen Durchschaltens oder des gänzlich Gesoerrtseins. Der Vorgang läuft im Prizip so ab: Wird der Transistor 34 durchgeschaltet, so stellt seine Emitter-Kollektorstrecke einen Widerstand von wenigem Ohm dar. Die Spannung am Kollektor wird daher schlagartig fast bis zum Nullpotential, nämlich bis zur Sättigungsspannung heruntergezogen. Dieser Spannungssprung wirkt sich über den Kondensator 36 auf die Basis des zweiten Transistors 35 aus, wobei der genannte Kondensator 36 und die Emitter-Basisstrecke des Transistors 35 einen Hochpaß bilden. Das Durchschalten des ersten Transistors 34 bewirkt, daß an der Basis des Transistors 35 die Spannung auf einen negativen Wert springt und der Transistor 35 damit gesperrt wird. Nun lädt sich jedoch der Kondensator 36 über den Widerstand 37 mit einer entsprechenden Zeitkonstanten auf ein positives Potential auf, bis zu einem Wert, bei dem ein Basisstrom in den Transistor 35 fließen kann, wonach dieser vom Stau in den Durchschlagszustand schaltet. Ein entsprechender Schaltvorgang setzt nun bezüglich des Transistors 34 ein, d.h. der Stromanstieg am Widerstand der Glimmlampe 30 des Warndreiecksbeleuchtungskörpers drückt die Spannung am Kollektor fast bis zum Nullpunkt herunter, wobei dieser Spannungssprung über den Kondensator 39 auf die Basis des Transistors 34 wirkt. Dieser sperrt anschließend schlagartig mit der Folge, daß sich allmählich der Kondensator 36 über den Widerstand 38 auflädt.

Die Schaltung ist zweckmäßigerweise so auszulegen, daß keine weiteren Transformatoren benötigt werden und ein unmittelbarer Anschluß an den 12 V-Stromkreis des Kraftfahrzeuges hergestellt werden kann.

Evtl. Spannungsverlusten über die Kabellänge von 200 bis 500m ist dabei Rechnung zu tragen.

Die in Fig. 4 dargestellte Multivibrator-Blinkschaltung kann ohne weiteres in den Flachquader 13 (siehe Fig. 1 und 2) oder in dem Vollkörper (29) nach Fig. 3 untergebracht werden.

Statt eine gesonderte Schaltung zu verwenden, ist es jedoch ebenso möglich, den im Kraftfahrzeug ohnehin vorgesehenen Taktgeber für die Warnblinkanlage als Taktelement für die Warndreiecksbeleuchtung zu verwenden. Selbstverständlich ist es bei Ausbildung eines Warndreieckes in Vollkörperform gem. Fig. 3 möglich, den Ort für die Anbringung der Beleuchtungskörper beliebig zu wählen. Vorzugsweise wird jedoch der Beleuchtungskörper dort angeordnet sein, wo er den geringsten Schattenwurf sichtbar werden läßt, also entweder hinter dem schwarzen senkrechten Balken, hinter der weißen Fläche und/oder hinter den roten Randschenkeln.

Im Prinzip ist es hierbei auch möglich, kleinere Leuchtstoffröhren einzusetzen oder eine Serienschaltung von einzelnen Glimmlampen vorzusehen.

Bei mehreren Glühbirnen kann vorzugsweise die Schaltung auch derart sein, daß die ringsum entlang den Dreiecksschenkeln angeordneten Glühbirnen in zeitlicher Aufeinanderfolge kurzzeitig angeschaltet werden. Es entsteht dann eine umlaufende Lichtsignalkette.

Um den durch das Warndreieck hervorzurufenden Warneffekt noch zu verbessern, kann im Bereich des Reflektorschenkels IIa oder des Ständers 10 ein z.B. um die Reflektorschenkelllängsachse verschwenkbar angelenktes Entfernungshinweisschild 40 od.dgl. angeordnet werden, das einen Hinweis auf den Abstand zwischen Warndreieck und einem Hindernis anzeigt, wie z.B. "100m" (Fig. 1).

Selbstverständlich ist das Anwendungsgebiet der zuvor beschriebenen Warndreiecke nicht auf Kraftfahrzeug-Warndreiecke beschränkt, da insbesondere die in Fig. 3 dargestellte Ausführungsform als Warnschild zur Absicherung von einer Kurzzeit-Baustelle geeignet ist. Diese Warnschilder haben gegenüber feststehenden Schildern den Vorteil, daß sie kurzzeitig, etwa um die Durchfahrt eines Baustellenfahrzeuges zu ermöglichen, ohne größeren Aufwand entfernt und wieder aufgestellt werden können. Hierzu kann eine Aufsteckhalterung 41 am Gehäusekörper 29 vorgesehen sein.

Weiterhin ist vorgesehen, daß am Warndreieck im Bereich eines Reflektorschenkels 11a-c (nicht dargestellt), des Ständers 10 (nicht dargestellt) oder im geschlossenen Hohlkörper 29 hinter einer Schallaustrittsöffnung 42 eine Warnlampe oder ein Nebelhorn 43 angeordnet ist. Alternativ oder ergänzend kann die Warnhupe bzw. das Nebelhorn 43; 143 auch am Warndreieck fest angeordnet oder an dieses anhängbar sein. Das Nebelhorn 143 ist dabei über ein aus einem Stecker 44 und einer Steckdose 45 bestehende Steckverbindung 46 direkt oder durch ein Kabel an die Stromversorgung des Warndreiecks 100; 200 angeschlossen. Die Warnhupe oder das Nebelhorn 43; 143 ist dabei zur Aussendung von unterbrochenen oder durchgehenden Warntönen ausgebildet.

Um das Warndreieck leichter transportieren zu können, sind an den Ständern Räder 47 oder (nicht dargestellte) Kufen und eine (nicht dargestellte) klappbare oder teleskopierbare Deichsel angeordnet.

Um mit dem Warndreieck ein Sicherheitssystem zu schaffen, ist im oder am Warndreieck 200 ein elektrischer Notrufsender 48 und ein Empfänger 49 vorgesehen, der über einen Notknopf 50 betätigbar ein Warnlicht oder akustische Warntöne in einem anderen Fahrzeug auslöst, das eine entsprechende Senderempfängereinheit aufweist. Eine entsprechende Ausrüstung kann auch im Fahrzeug selbst angeordnet sein und es kann vorgesehen werden, daß ein zu ortendes Signal ausgesandt wird, das entsprechende Notrufeinrichtungen beispielsweise bei Hilfsorganisationen, Polizei, Feuerwehr od.dgl. auslöst und somit zum Aufsuchen des Warndreiecks bzw. des Fahrzeugs führt.

Um eine optimale Anpassung des Warndreiecks in der Höhe, insbesondere bei Schneefall, vorzunehmen, kann vorgesehen sein, die Ständerbeine 10a, 10b teleskopierbar auszubilden, wie dies in Fig. 2 angedeutet ist. Dabei können die Ständerbeine 10a, 10b unabhängig von ihrer Teleskopierbarkeit Leuchtreflektorelemente oder Glühbirnen 51 aufweisen, wie diese in Fig. 3 dargestellt sind.

Zur optimalen Sicherung gegen ein Zuschneien des Warndreiecks ist vorgesehen, daß die einzelnen Teile des Warndreiecks wie die beleuchtete Warndreieckoberfläche 52, das Informations- oder Entfernungshinweisschild 40, die Außenfläche der Lichtaustrittsbereiche der Warnleuchte 22 oder die Reflektorschenkel des Warndreiecks mit einem oder mehreren (in der Zeichnung nicht dargestellten Scheibenwischern versehen werden, so daß immer eine Sauberhaltung der Flächen möglich ist. Der notwendige elektrische Antrieb kann dabei im Warndreieck selbst angeordnet sein.

**Patentansprüche**

1. Warndreieck (100; 200) für Kraftfahrzeuge, das in Formgebung und Farbe dem Warnschild "Gefahrenstelle" entspricht, bestehend aus einem vorzugsweise ausund einklappbaren Ständer (10), drei in Dreiecksform angeordneten Reflektorschenkeln (11a—c) und einer dazwischenliegenden, weißen (Hintergrund-) fläche (12) mit einem senkrechten schwarzen Balken (13), wobei das Warndreieck (100; 200) selbstleuchtend ist und die Beleuchtung (19) über ein mit der Kraftfahrzeugbatterie direkt oder indirekt verbindbares Kabel (16) oder über eine im Warndreieck integrierte Energiequelle mit Energie versorgt wird, dadurch gekennzeichnet,

daß es in im Prinzip nach dem Stand der Technik bekannter Weise klappbar ist und der mit der Beleuchtungseinrichtung (19) ausgestattete Balken als auf der Hintergrundfläche oder in einer Aussparung in der Hintergrundfläche angeordneter Flachquader (13) ausgebildet ist und daß der Flachquader (13) an der frontseitigen Oberfläche (13a) und der rückseitigen Oberfläche (13c) lichtundurchlässig ist und daß die Seitenflächen (13b) lichtdurchlässig sind.

2. Warndreieck nach Anspruch 1, dadurch gekennzeichnet, daß der Flachquader (13) über flexible Schnüre (17a—c) über ösenverbindungen an den Eckpunkten der Reflektorschenkel (11a—c) einhängbar ist.

3. Warndreieck nach Anspruch 1, dadurch gekennzeichnet, daß der Flachquader (13) an einem als weiße (Hintergrund-) Fläche dienenden und in entsprechend verstärkter Ausführungsform ausgebildeten Folientuch (12) befestigt oder eingehängt ist.

4. Warndreieck nach einem der Ansprüche 1 bis 3, dadurch gekennzeichnet, daß die im Flachquader (13) ausgebildete Beleuchtungseinrichtung (19) als Lichterzeuger wie eine Glühbirne (20) od.dgl. ausgebildet ist.

5. Warndreieck nach einem der Ansprüche 1 bis 4, dadurch gekennzeichnet, daß die Energiequelle als in einem oder mehreren Reflektorschenkeln (11a—c) angeordnete Batterie oder Akkumulator ausgebildet ist und über entsprechende Verbindungsleitungen mit der Beleuchtungseinrichtung (19) verbindbar ist.

6. Warndreieck nach einem der Ansprüche 1 bis 5, dadurch gekennzeichnet, daß die Reflektorschenkel (11a—c) selbstleuchtend ausgebildet sind.

7. Warndreieck nach einem der Ansprüche 1 bis 6, dadurch gekennzeichnet, daß die Lichtaustrittsbereiche des Flachquaders (13) und/oder der Reflektorschenkel (11a—c) zumindest teilweise mit Heizfäden (21) versehen sind.

8. Warndreieck nach einem der Ansprüche 1 bis 7, dadurch gekennzeichnet, daß das Warndreieck (200) mit einer an sich bekannten Warnleuchte (22) mit rotem, blauem und/oder gelbem Blinklicht kombiniert wird, wobei die Warnleuchte (22) mit dem Warndreieck (200) fest verbunden oder auf diese aufsetzbar ist und über eine aus einem Stecker (23) und einer Steckdose (24) bestehende Steckverbindung (25) an die Stromversorgung des Warndreiecks (200) anschließbar ist.

9. Warndreieck nach einem der Ansprüche 1 bis 8, dadurch gekennzeichnet, daß die Lichtaustrittsbereiche der Warnleuchte (22) mit Heizfäden (26) versehen sind.

10. Warndreieck nach einem der Ansprüche 1 bis 9, dadurch gekennzeichnet, daß das Warndreieck (100; 200) im Bereich des Reflektorschenkels (11a) oder des Ständers (10) mit einem verschwenkbar angeordneten Informationsoder Entfernungshinweisschild (40) versehen ist.

11. Warndreieck nach einem der Ansprüche 1 bis 10, dadurch gekennzeichnet, daß das Informations- oder Entfernungshinweisschild (40) zumindest teilweise mit Heizfäden versehen ist.

12. Warndreieck nach einem der Ansprüche 1 bis 11, dadurch gekennzeichnet, daß das Kabel (16) oder das Abstandsseil auf einer am oder im Warndreieck befestigten Trommel (14) aufgewikkelt ist.

13. Warndreieck nach Anspruch 12, dadurch gekennzeichnet, daß die Trommel (14) für das Kabel (16) oder das Abstandsseil auf dem Ständer (10) über eine aus einem Stecker (111) und einer Steckdose (112) bestehenden Steckverbindung (110) abnehmbar befestigt ist.

14. Warndreieck nach Anspruch 12 oder 13, dadurch gekennzeichnet, daß die Kabeltrommel (14) bzw. Abstandsseil im unteren Basisreflektorschenkel (11a) in einem Vollkörper integriert ist.

15. Warndreieck nach einem der Ansprüche 12 bis 14, dadurch gekennzeichnet, daß die Kabeltrommel (14) bzw. die Abstandsseiltrommel im unteren Basisreflektorschenkel (11a) angeordnet, durch eine Kurbel oder einen Antriebsmotor antreibbar und manuell oder automatisch gesteuert betätigbar ist.

16. Warndreieck nach einem der Ansprüche 1 bis 15, dadurch gekennzeichnet, daß die weiße Hintergrundfläche als Kunststoffolientuch (12) mit oder ohne Aussparung für den fest oder lösbar angeordneten Beleuchtungsflachquader (13) ausgebildet ist.

17. Warndreieck nach Anspruch 16, dadurch gekennzeichnet, daß das Informationsoder Entfernungshinweisschild (40) seitlich in das Warndreieck einschiebbar und/oder über die Stromversorgung des Warndreiecks beleuchtbar ist.

18. Warndreieck nach einem der Ansprüche 10 und 11, dadurch gekennzeichnet, daß die Entfernung zwischen Warndreieck und Kraftfahrzeug im/am Entfernungshinweisschild (40) und die Ursache des Nothaltes im/am Informationshinweisschild (40) manuell oder automatisch einstellbar ist.

19. Warndreieck nach einem der Ansprüche 1 bis 18, dadurch gekennzeichnet, daß im/am Warndreieck (200) im Bereich eines Reflektorschenkels, des Ständers oder im geschlossenen Hohlkörper hinter einer Schallaustrittsöffnung (42) ein Nebelhorn/Warnhupe (43) angeordnet ist.

20. Warndreieck nach Anspruch 19, dadurch gekennzeichnet, daß die Warnhupe oder das Nebelhorn (143) im/am Warndreieck (200) fest angeordnet, an dieses anhängbar oder auf dieses aufsteckbar ausgebildet ist und über eine aus einem Stecker (44) und einer Steckdose (45) bestehende Steckerverbindung (46) an die Stromversorgung des Warndreiecks (200) anschließbar ist.

21. Warndreieck nach Anspruch 19 oder 20, dadurch gekennzeichnet, daß die Warnhupe oder das Nebelhorn (43; 143) im/am Warndreieck (200) sowohl im Fahrzeug als auch außerhalb des Fahrzeugs unterbrochene oder durchgehende Warntöne aussendet.

22. Warndreieck nach einem der Ansprüche 1 bis 21, dadurch gekennzeichnet, daß am Warndreieck (200) an den Ständern Räder (47) oder Kufen und eine klappbare oder zusammenschiebbare Deichsel angeordnet ist.

23. Warndreieck nach einem der Ansprüche 1 bis 22, dadurch gekennzeichnet, daß im oder am Warndreieck (200) oder im Fahrzeug ein elektronischer Notrufsender (48)/Empfänger (49) mit einer bestimmten Reichweite angeordnet ist und durch einen Notknopf (50) oder Schalter ausgelöst ein im Bereich des Warndreiecks befindliches anderes optisches rotes Warnlicht und akustische Warntöne z.B. in einem anderen Fahrzeug auslöst.

24. Warndreieck nach einem der Ansprüche 1 bis 23, dadurch gekennzeichnet, daß die Ständerbeine (10a—10d) des Warndreiecks (100) teleskopierbar ausgebildet sind.

25. Warndreieck nach einem der Ansprüche 1 bis 24, dadurch gekennzeichnet, daß die Ständerbeine (10a—10d) des Warndreiecks (200) Leuchtreflektorelemente/Glühbirnen (51) aufweisen.

26. Warndreieck nach einem der Ansprüche 1 bis 25, dadurch gekennzeichnet, daß die beleuchtete Warndreieck-Oberfläche (52) und/oder das Informations- oder Entfernungshinweisschild (40) mit einem Scheibenwischer versehen ist.

27. Warndreieck nach einem der Ansprüche 1 bis 26, dadurch gekennzeichnet, daß im Warndreieck und/oder im Informations- oder Entfernungshinweisschild (40) ein Scheibenwischermotor angeordnet ist.

28. Warndreieck nach einem der Ansprüche 1 bis 27, dadurch gekennzeichnet, daß die Außenfläche der Lichtaustrittsbereiche der Warnleuchte (22) mit einem Scheibenwischer ausgestattet ist.

29. Warndreieck nach einem der Ansprüche 1 bis 28, dadurch gekennzeichnet, daß im Warndreieck (200) oder in der Warnleuchte (22) ein oder jeweils ein elektrischer Scheibenwischermotor angeordnet ist.

30. Warndreieck nach einem der Ansprüche 1 bis 29, dadurch gekennzeichnet, daß im Warndreieck oder am Warndrei eine weit sichtbare, in einen leuchtenden Zustand versetzbare Notrakete angeordnet ist.

31. Warndreieck nach einem der Ansprüche 1 bis 30, dadurch gekennzeichnet, daß das Warndreieck einen Fahrantrieb aufweist, der über eine an sich bekannte Fernsteuerung ansteuerbar ist.

32. Warndreieck nach einem der Ansprüche 1 bis 31, dadurch gekennzeichnet, daß über eine am Warndreieck oder an einem Fahrzeug angeordnete elektronische Abstandsmeßeinrichtung zur Entfernungsmessung und Entfernungsanzeige die Entfernung zwischen Fahrzeug und Warndreieck feststellbar ist.

**Revendications**

1. Triangle de signalisation (100; 200) pour véhicules automobiles, dont la conformation et la couleur correspondent au Panneau de signalisation "danger", se composant d'un support (10) pouvant, de préférence, être déplié et replié, de trois montants réfléchissants (11a—c) disposés en triangle et d'une surface (de fond) (12) blanche, située entre ceux-ci avec une barre noire (13) verticale, le triangle de signalisation (100; 200) étant autolumineux et l'éclairage (19) étant alimenté en énergie par un câble pouvant être relié directement ou indirectement à la batterie du véhicule automobile ou par une source d'énergie intégrée au triangle de signalisation, caractérisé en ce qu'il est pliable d'une façon connue, quant à son principe, par l'état de la technique, que la barre équipée du dispositif d'éclairage (19) est formée comme un parallélépipède plat (13) placé sur la surface de fond ou dans un évidement ménagé dans la surface de fond et que le parallélépipède plat (13) est opaque sur la surface frontale (13a) et la surface de dos (13c) et que les faces latérales (13b) sont translucides.

2. Triangle de signalisation selon la revendication 1, caractérisé en ce que le parallélépipède plat (13) peut être accroché aux points d'angle des montants réfléchissants (11a—c) par des cordons flexibles (17a—c) par des raccords à oeillets.

3. Triangle de signalisation selon l'une des revendications 1, caractérisé en ce que le parallélépipède plat (13) est fixé ou accroché à une pièce de feuille (12) servant de surface (de fond) blanche et configurée en étant renforcée en conséquence.

4. Triangle de signalisation selon l'une des revendications 1 à 3, caractérisé en ce que le dispositif d'éclairage (19), formé dans le parallélépipède plat (13), est formé, en tant que générateur de lumière, comme une lampe à incandescence (20) ou équivalent.

5. Triangle de signalisation selon l'une des revendications 1 à 4, caractérisé en ce que la source d'énergie est formée comme une batterie ou un accumulateur placé dans un ou plusieurs montants réfléchissants (11a—c) et qu'elle peut être reliée au dispositif d'éclairage (19) par des lignes de jonction correspondantes.

6. Triangle de signalisation selon l'une des revendications 1 à 5, caractérisé en ce que les montants réfléchissants (11 a—c) sont configurés en étant autolumineux.

7. Triangle de signalisation selon l'une des revendications 1 à 6, caractérisé en ce que les zones de sortie de la lumière du parallélépipède plat (13) et/ou des montants réfléchissants (11a—c) sont équipés au moins en partie de conducteurs chauffants (21).

8. Triangle de signalisation selon l'une des revendications 1 à 7, caractérisé en ce que le triangle de signalisation (200) est combiné à une lampe de signalisation (22) connue en soi avec un feu clignotant rouge, bleu et/ou jaune, la lampe de signalisation (22) étant reliée de manière fixe au triangle de signalisation (200) ou pouvant être posée sur celuici et pouvant être branchée sur l'alimentation en courant du triangle de signalisation (200) par un connecteur mâle-femelle (25) composé d'une fiche mâle (23) et d'une prise (24).

9. Triangle de signalisation selon l'une des revendications 1 à 8, caractérisé en ce que les zones de sortie de la lumière de la lampe de signalisation (22) sont pourvues de conducteurs chauffants (26).

10. Triangle de signalisation selon l'une des revendications 1 à 9, caractérisé en ce que le triangle de signalisation (100; 200) est pourvu, dans la zone du montant réfléchissant (11a) ou du support (10) d'un panneau d'indication de distance ou d'informations (40) placé en étant pivotant.

11. Triangle de signalisation selon l'une des revendications 1 à 10, caractérisé en ce que le panneau d'indication de distance ou d'informations (40) est équipé au moins en partie de conducteurs chauffants.

12. Triangle de signalisation selon l'une des revendications 1 à 11, caractérisé en ce que le câble (16) ou le câble d'espacement est enroulé sur une bobine (14) fixée sur ou dans le triangle de signalisation.

13. Triangle de signalisation selon la revendication 12, caractérisé en ce que la bobine (14) pour le câble (16) ou le câble d'espacement est fixée de manière amovible sur le support (10) par un connecteur mâle femelle (110) composé d'une fiche mâle (111) et d'une prise (112).

14. Triangle de signalisation selon la revendication 12 ou 13, caractérisé en ce que la bobine de câble (14) ou de câble d'espacement est intégrée à un corps plein dans le montant réfléchissant inférieur de la base (111a).

15. Triangle de signalisation selon l'une des revendications 12 à 14, caractérisé en ce que la bobine de câble (14) et/ou la bobine de câble d'espacement est placée dans le montant réfléchissant inférieur de la base (11a), qu'elle peut être commandée par une manivelle ou un moteur de commande et qu'elle peut être actionnée manuellement ou à commande automatique.

16. Triangle de signalisation selon l'une des revendications 1 à 15, caractérisé en ce que la surface de fond blanche est configurée comme une pièce de feuille plastique (12) avec ou sans évidement pour le parallélépipède plat d'éclairage (13) placé de manière fixe ou amovible.

17. Triangle de signalisation selon la revendication 16, caractérisé en ce que le panneau indicateur de distance ou d'informations (40) peut être introduit par glissement dans le triangle de signalisation sur le côté et/ou peut être éclairé par l'alimentation en courant du triangle de signalisation.

18. Triangle de signalisation selon l'une des revendications 10 et 11, caractérisé en ce que la distance entre le triangle de signalisation et le véhicule dans/sur le panneau indicateur de distance (40) et la cause de l'arrêt d'urgence peut être réglée sur/dans le panneau indicateur d'informations (40) à la main ou automatiquement.

19. Triangle de signalisation selon l'une des revendications 1 à 18, caractérisé en ce qu'une corne de brume/qu'un avertisseur sonore (43) est placé sur/dans le triangle de signalisation (200) dans la zone d'un montant réfléchissant, du support ou dans le corps creux fermé derrière un pavillon (42).

20. Triangle de signalisation selon la revendication 19, caractérisé en ce que l'avertisseur sonore ou la corne de brume (143) est fixé de manière fixe dans/sur le triangle de signalisation (200), qu'il est formé de manière à pouvoir être accroché à celuici ou emboîté sur celui-ci et qu'il peut être branché sur l'alimentation en courant du triangle de signalisation (200) par un connecteur mâle-femelle (46) composé d'une fiche mâle (44) et d'une prise (45).

21. Triangle de signalisation selon la revendication 19 ou 20, caractérisé en ce que l'avertisseur sonore ou la corne de brume (43; 13) dans/sur le triangle de signalisation émet des tonalités d'alarme interrompues ou continues aussi bien dans le véhicule qu'à l'extérieur de celui-ci.

22. Triangle de signalisation selon l'une des revendications 1 à 21, caractérisé en ce que des roulettes (47) ou des patins ou un timon pliable ou télescopique sont placés sur les supports.

23. Triangle de signalisation selon l'une des revendications 1 à 22, caractérisé en ce qu'un émetteur (48)/récepteur (49) électronique de détresse d'un certain rayon effectif est placé dans ou sur le triangle de signalisation (200) ou dans le véhicule et qu'il déclenche, actionné par un bouton d'urgence (50) ou un commutateur, un autre signal lumineux rouge se trouvant dans la zone du triangle de signalisation et des tonalités d'alarme, par exemple dans un autre véhicule.

24. Triangle de signalisation selon l'une des revendications 1 à 23, caractérisé en ce que les pieds du support (10a—10d) du triangle de signalisation (100) sont télescopiques.

25. Triangle de signalisation selon l'une des revendications 1 à 24, caractérisé en ce que les pieds du support (10a—10d) du triangle de signalisation (200) présentent des éléments réfléchissants/lampes à incandescence (51).

26. Triangle de signalisation selon l'une des revendications 1 à 25, caractérisé en ce que la surface éclairée (52) du triangle de signalisation et/ou le panneau indicateur de distance ou d'informations (40) est équipée d'un essui-glace.

27. Triangle de signalisation selon l'une des revendications 1 à 26, caractérisé en ce qu'un moteur pour essuie-glace est placé dans le triangle de signalisation et/ou dans le panneau indicateur de distance ou d'informations (40).

28. Triangle de signalisation selon l'une des revendications 1 à 27, caractérisé en ce que la face extérieure des zones de sortie de la lumière de la lampe de signalisation (22) est équipée d'un essui-glace.

29. Triangle de signalisation selon l'une des revendications 1 à 28, caractérisé en ce qu'un moteur électrique pour essuie-glace est placé dans le triangle de signalisation (200) ou dans la lampe de signalisation (22) ou qu'il y en ait un dans chacun des deux.

30. Triangle de signalisation selon l'une des revendications 1 à 29, caractérisé en ce qu'une fusée de secours visible de loin et pouvant être mise dans un état lumineux est placée dans le triangle de signalisation ou sur le triangle de signalisation.

31. Triangle de signalisation selon l'une des revendications 1 à 30, caractérisé en ce que le triangle de signalisation présente un organe de translation qui peut être commandé par une télécommande connue en soi.

32. Triangle de signalisation selon l'une des revendications 1 à 31, caractérisé en ce que la distance entre le véhicule et le triangle de signalisation peut être constatée par un dispositif électronique de mesure de la distance pour télémétrie et indication de la distance placé sur le triangle de signalisation ou dans un véhicule.

**Claims**

1. Warning triangle (100; 200) for motor vehicles which, in shape and in color, corresponds to the "Danger Spot" warning sign, comprised of a stand (10) which preferably is inwardly and outwardly foldable, of three reflector legs (11a—c) arranged in the form of a triangle and of an interjacent white (background) surface (12) with a vertical black bar (13), wherein the warning triangle (100; 200) is luminous and the lighting means (19) is supplied with power with the aid of a cable (16) that is directly or indirectly connectable to the vehicle battery or by means of a power source incorporated into the warning triangle, characterized in that,

in principle, it is foldable in a known manner according to the state of the art and in that the bar equipped with the lighting means (19) is constructed in the form of a flat cuboid (13) mounted on the background surface or in a cutout in the background surface, and in that the flat cuboid (13) is opaque both on the anterior surface (13a) as well as on the posterior surface (13c), and in that the lateral surfaces (13b) are translucent.

2. Warning triangle according to Claim 1, characterized in that the flat cuboid (13) can be suspended by means of flexible cords (17a—c) via eyelet connections on the corner points of the reflector legs (11a—c).

3. Warning triangle according to Claim 1, characterized in that the flat cuboid (13) is secured to or suspended from a plastic sheet fabric (12) which serves as a white (background) surface and is constructed in the form of an appropriately strengthened embodiment.

4. Warning triangle according to any of Claims 1 to 3, characterized in that the lighting means (19) installed inside the flat cuboid (13) is constructed in the form of a glow lamp (20) or the like.

5. Warning triangle according to any of Claims 1 to 4, characterized in that the power source is constructed in the form of a battery or accumulator disposed inside one or several reflector leg(s) (11a—c) and can be connected to the lighting means (19) via appropriate interconnection lines.

6. Warning triangle according to any of Claims 1 to 5, characterized in that the reflector legs (11a—c) are constructed so as to be luminous.

7. Warning triangle according to any of Claims 1 to 6, characterized in that the light emergence areas of the flat cuboid (13) and/or of the reflector legs (11a—c) are, at least in part, provided with heating filaments (21).

8. Warning triangle according to any of Claims 1 to 7, characterized in that the warning triangle (200) is combined with a warning light (22) known per se with a red, blue and/or yellow flashing light, wherein the warning light (22) is rigidly connected to the wiring triangle (200) or is insertable or attachable into or onto the latter, and is connectable to the power supply of the warning triangle (200) by means of a connector (25) comprising a plug (23) and a socket (24).

9. Warning triangle according to any of Claims 1 to 8, characterized in that the light emergence areas of the warning light (22) are provided with heating filaments (26).

10. Warning triangle according to any of Claims 1 to 9, characterized in that the warning triangle (100; 200) is, within the area of the reflector leg (11a) or of the stand (10, provided with a pivotably mounted information or distance-indicating sign (40).

11. Warning triangle according to any of Claims 1 to 10, characterized in that the information or distance-indicating sign (40) is, at least in part, provided with heating filaments.

12. Warning triangle according to any of Claims 1 to 11, characterized in that the cable (16) or the distance-indicating cord is wound onto a drum (14) secured on or in the warning triangle.

13. Warning triangle according to any of Claims 1 to 12, characterized in that the drum (14) for the cable (16) or for the distance-indicating cord is detachably secured on the stand (10) by means of a connector (110) comprised of a plug (111) and a socket (112).

14. Warning triangle according to either Claim 13 or 14, characterized in that the cable drum (14) or the distance-indicating cord drum in the lower base reflector leg (11a) is incorporated into a solid body.

15. Warning triangle according to any of Claims 13 to 15, characterized in that the cable drum (14) or the distance-indicating cord drum disposed within the lower base reflector leg (11a) can be driven by a crank or a drive motor and can be actuated in a manually or automatically controlled manner.

16. Warning triangle according to any of Claims 1 to 16, characterized in that the white background surface is constructed in the form of a plastic sheet fabric (12) with or without a cutout for the fixedly or detachably arranged flat lighting cuboid (13).

17. Warning triangle according to Claim 16, characterized in that the information or distance-indicating sign (40) is laterally insertable into the warning triangle and/or can be illuminated by means of the power supply of the warning triangle.

18. Warning triangle according to either Claim 10 or 11, characterized in that the distance between the warning triangle and the vehicle in/on the distance-indicating sign (40) and the cause of the emergency stop in/on the information sign (40) can be manually or automatically adjusted.

19. Warning triangle according to any of Claims 1 to 18, in/on the warning triangle (200), within the area of a reflector leg, of the stand or in the compact solid body, a foghorn/warning hooter (43) is mounted behind a sound-emergence aperture (42).

20. Warning triangle according to Claim 19, characterized in that the warning hooter or the foghorn (143) is mounted fixedly in/on the warning triangle (200) and is constructed so as to be suspendable from or insertable into the latter and so as to be connectable to the power supply of the warning triangle (200) by means of a connector (46) comprised of a plug (44) and a socket (45).

21. Warning triangle according to either Claim 19 or 20, characterized in that the warning hooter or the foghorn (43; 143) in/on the warning triangle (200), both inside the vehicle as well as outside the vehicle, emits intermittent or continuous warning sounds.

22. Warning triangle according to any of Claims 1 to 21, characterized in that, on the warning triangle (200), on the stands, wheel (47) or skids, a foldable or inwardly telescopable pole is fitted.

23. Warning triangle according to any of Claims 1 to 22, characterized in that, in or on the warning triangle (200), or inside the vehicle, an electronic distress call emitter (48)/receiver (49) having a specific range is disposed and, triggered by an emergency button (50) or switch, sets off another optical red warning light located within the area of the warning triangle, as well as triggering acoustic warning sounds e.g. in another vehicle.

24. Warning triangle according to any of Claims 1 to 23, characterized in that the legs of the stand (10a—10d) of the warning triangle (100) are constructed so as to be telescopable.

25. Warning triangle according to any of Claims 1 to 24, characterized in that the legs of the stand (10a—10d) of the warning triangle (200) are provided with light-reflecting fittings/glow lamps (51).

26. Warning triangle according to any of Claims 1 to 25, characterized in that the illuminated warning triangle surface (52) and/or the information or distance-indicating sign (40) is provided with a windshield wiper.

27. Warning triangle according to any of Claims 1 to 26, characterized in that, in the warning triangle and/or in the information or distance-indicating sign (40), a windshield wiper motor is installed.

28. Warning triangle according to any of Claims 1 to 27, characterized in that the outer surface of the light emergence areas ofthe warning light (22) is fitted with a windshield wiper.

29. Warning triangle according to any of Claims 1 to 28, characterized in that, in the warning triangle (200) or in the warning light (22), one electric windshield wiper motor each is provided.

30. Warning triangle according to any of Claims 1 to 29, characterized in that, in or on the warning triangle, a distress signal rocket is disposed which is visible from afar and which can be rendered luminescent.

31. Warning triangle according to any of Claims 1 to 31, characterized in that the warning triangle is provided with a drive means that can be triggered by a remote control means known per se.

32. Warning triangle according to any of Claims 1 to 32, characterized in that the distance between the vehicle and the warning triangle can be determined with the aid of an electronic distance-measuring and indicating device mounted on the warning triangle or on a vehicle.

Fig.1

Fig.2

Fig. 3

Fig. 4